# EUROPEAN PATENT SPECIFICATION

(11) **EP 2 474 965 B1**
(45) Date of publication and mention of the grant of the patent: **09.11.2016**
(21) Application number: 10813820.7
(22) Date of filing: 03.09.2010
(51) Int. Cl.: B29C 65/52, G02F 1/13, B29C 65/48, B29C 65/78, B32B 37/12, B29C 65/14, B29L 31/34

(54) **FILLING DEVICE**
FÜLLVORRICHTUNG
DISPOSITIF DE REMPLISSAGE

(30) Priority: 04.09.2009 JP 2009205171
(43) Date of publication of application: 11.07.2012
(73) Proprietor: Dexerials Corporation, Tokyo (JP)
(72) Inventor: MATSUMOTO, Tadakazu, Tokyo 141-0032 (JP); SUYAMA Yukio, Tokyo 141-0032 (JP); USUI, Hiroyuki, Tokyo 141-0032 (JP); SHINYA, Yoshihisa, Tokyo 141-0032 (JP); ENDO, Yasumi, Tokyo 141-0032 (JP)
(74) Representative: Müller Hoffmann & Partner
(86) International application number: PCT/JP2010/065178
(87) International publication number: WO 2011/027873

(56) References cited:
- EP-A1- 1 086 926
- WO-A1-97/35720
- JP-A- 6 340 453
- JP-A- 2000 507 174
- JP-A- 2007 120 729
- JP-A- 2007 230 216
- JP-A- 2009 186 959
- JP-U- H0 457 820
- US-B1- 6 231 706

## Description

### Technical Field

This invention relates to an apparatus for charging a liquid material into a space between plate-shaped members, for example, an apparatus for charging a liquid resin material into a space between large-sized plate-shaped members, such as picture image display panels and transparent plate-shaped members.

### Background Art

Among related methods for bonding plate-shaped members together, there is known a method employing an apparatus for bonding disc substrates together (see Patent Publication 1). This sort of the bonding apparatus includes a stage on which a stamper is set, a substrate holding member adapted for moving in the up-and-down direction above the stage and for holding a bonding substrate thereon, and a nozzle for coating an adhesive on the stamper.

In the bonding apparatus, when the stamper is set on the stage, and the substrate holding member sucks the substrate under vacuum to hold the substrate in a state of facing the stamper, an adhesive is delivered from the nozzle onto the stamper. The adhesive descends onto the stamper to heap thereon so as to be contacted with the substrate as well. With rotation of the stage and the substrate holding member, the adhesive is spread in a space between the stamper and the substrate. The adhesive is then cured by ultraviolet radiation or heating to cause the stamper and the substrate to be bonded together.

### Related Technical Document

### Patent Document

Patent Document 1: Japanese Laid-Open Patent Publication S61-194662

### Disclosure of the Invention

### Problem to be solved by the Invention

However, if an emission nozzle is to be introduced into a gap between pair plate-shaped members, arranged facing each other, in order to charge the resin in the gap, there is a risk that the nozzle comes into sliding contact with the surfaces of the plate-shaped members to damage the plate-shaped members. Such risk becomes higher the narrower becomes the gap between the plate-shaped members. In particular, if the plate-shaped member is a substrate of, for example, an optical disc or a liquid crystal panel, damages to the substrate surface due to sliding contact with the nozzle may give rise to light scattering, thus possibly affecting the recording/ reproducing characteristic or the viewing performance.

Moreover, so-called drooping of the liquid material, in which the resin emitted at the emission nozzle becomes deposited at or near an emission opening thereof to droop even after cessation of the emission, the resin may be deposited on unanticipated sites such as substrate end face. In such case, the wipe-off operation may become onerous. In addition, the so deposited resin tends to be cured at an earlier time than the resin charged on scheduled sites, such that air bubbles tend to be left in the gap between the pair substrates.

If, in an attempt to prevent the nozzle from coming into sliding contact with the major surfaces of the plate-shaped members, the movement speed of the nozzle is lowered, the air exposure time duration of the resin emitted previously may differ significantly from that of the resin emitted later. In such case, charging or curing characteristics of the resin may be differentiated.

It is desirable to provide a charging device in which it is possible to prevent damaging to the plate-shaped members due to contact between the nozzle and the plate-shaped members and in which the charging liquid material may be coated in the gap between the pair plate-shaped members without lowering the nozzle movement speed and without the risk of drooping of the charging liquid material.

WO 97/35720 A1 discloses a method for laminating boards including placing boards with a narrow gap therebetween, inserting an adhesive injection nozzle into the gap, discharging adhesive from the nozzle into the gap so that the discharged adhesive makes into contact with the two boards, continuing discharging the adhesive while the boards are being rotated in a planar direction thereof so that the adhesive is placed in a loop into the gap, retreating the nozzle from the gap, and narrowing the gap between the boards so that the adhesive is spread throughout the gap.

US 6 231 706 B1 discloses substrates to be paired that are alternately aligned. One substrate of the pair of substrates adjacent to each other is turned over thereby to face the other substrate, and the substrates held in a state facing each other are sent to a bonding position. An adhesive is supplied annularly into an interval of the substrates, and the substrates are rotated in a planar direction to thereby narrow the interval and eventually spread the adhesive in a radial direction to form an adhesive layer. The lower substrate is supported from below and carried from the bonding position to a setting position, and the adhesive layer is set, whereby an optical disk is obtained. The optical disk is taken out from the setting position.

In EP 1 086 926 A1, a fuel delivery nozzle having an outlet pipe with a non-wetting coating to which fuel does not adhere is disclosed. This prevents drips after the nozzle has been removed from a filler neck of a receptacle, and prevents contamination between subsequent transactions.

### Means to solve the Problem

The above objects are solved by the subject matter according to independent claim 1.

It is desirable to provide a charging device including a plurality of holding members for holding a plurality of plate-shaped members so that the major surfaces of the plate-shaped members will face each other, and a movement member for causing movement of the holding members towards and away from each other. The charging device also includes an emission nozzle introduced into a gap defined between the plate-shaped members, held by the holding members for facing each other, in order to emit a charging liquid material into the gap. The charging device also includes a nozzle movement unit for causing movement of the emission nozzle in an in-plane direction of the plate-shaped members, and a control unit for controlling the nozzle movement unit. The charging device further includes a reservoir in which the charging liquid material is stored and a thrust unit for emitting the charging liquid material stored in the reservoir via the emission nozzle. The emission nozzle is coated with resin.

### Effect of the Invention

According to an embodiment of the present invention, in which the emission nozzle is coated with resin, the emission nozzle is softer than the plate-shaped members, such that, if it is abutted against the plate-shaped members due to vibrations or flexures, it is not liable to damage the plate-shaped members. Moreover, according to the present invention, in which the emission nozzle is coated with resin, it is possible to prevent so-called liquid drooping in which the charging liquid material droops from the emission opening even after cessation of the emission. In addition, according to the present invention, in which the emission nozzle is coated with resin, the charging liquid material may be coated without lowering the movement speed by the nozzle movement unit, such that there is no risk that air exposure time of the charging liquid material emitted earlier is different from that of the charging liquid material emitted later with consequent quality deterioration.

### Brief Description of the Drawings

Fig.1 is a side view showing a charging device.
Fig.2 is a plan view of the charging device.
Fig.3 is a schematic side view for illustrating the method for position matching between the plate-shaped members by the charging device.
Fig.4 is another schematic side view for illustrating the method for position matching between the plate-shaped members by the charging device.
Fig.5 is a schematic cross-sectional side view of an emission nozzle.
Figs.6A to C show a foremost part of the emission nozzle, with Fig.6A showing its cross-sectional view, Fig.6B showing its plan view and Fig.6C showing its side view.
Fig.7 is a schematic cross-sectional view showing the emission nozzle emitting the charging liquid material.
Figs.8A to G are schematic cross-sectional views for illustrating the charging process steps by the charging device.

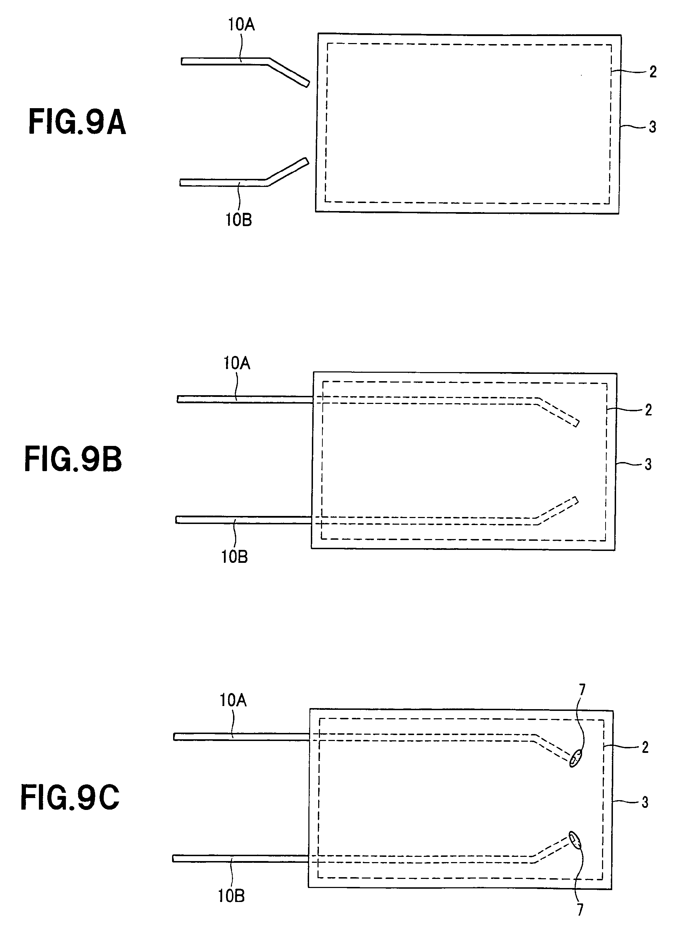

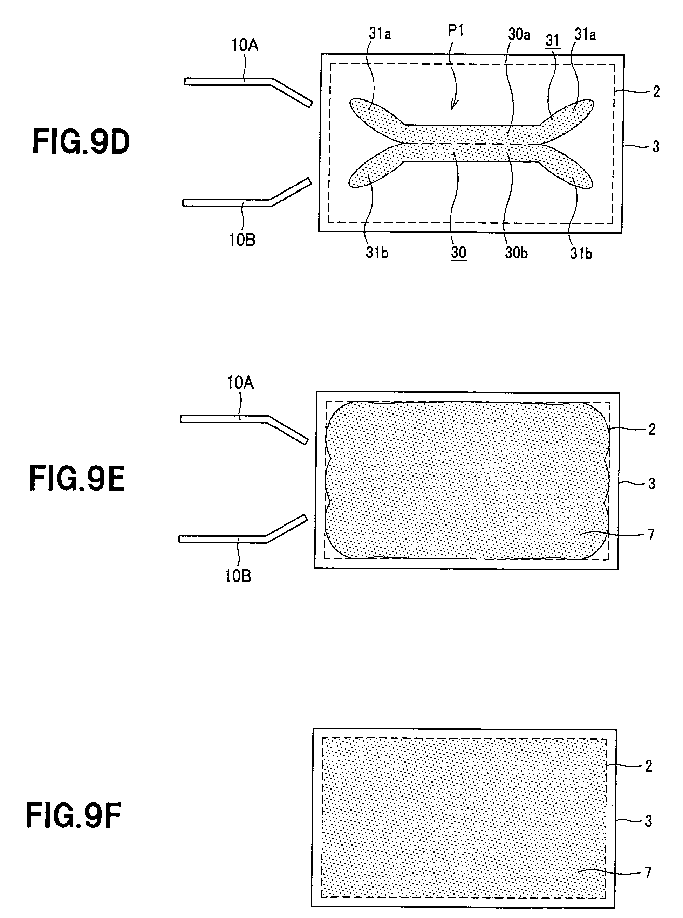

Fig.9A is a plan view for illustrating the state in which a protective panel has been sucked to a protective panel holding base member, Fig.9B is a plan view for illustrating the state in which the emission nozzle has been introduced into the gap from one end sides of the liquid crystal panel and the protective panel, Fig.9C is a plan view for illustrating the state in which a preset charging pattern is plotted in a gap between the liquid crystal panel and the protective panel, Fig.9D is a plan view for illustrating the state in which the emission nozzle emits an adhesive as it is moved to draw the preset plot pattern, Fig.9E is a plan view showing the state in which the liquid crystal panel and the protective panel are thrust relative to each other to spread the adhesive apart, and Fig.9F is a plan view showing the state in which the adhesive has been uniformly charged even to nich parts in the gap between the liquid crystal panel and the protective panel.
Figs.10A and B are schematic cross-sectional views showing the process of coating by the emission nozzle as the nozzle is in sliding contact with the plate-shaped members, with Fig.10A showing the emission nozzle coating the adhesive as the nozzle is in sliding contact with the upper plate-shaped member and Fig.10B showing the emission nozzle coating the adhesive as the nozzle is in sliding contact with the lower plate-shaped member.
Fig. 11 is a plan view showing a modification of the charging device.

### Best Mode for Carrying out the Invention

A charging device 1 according to the present invention will now be described in detail with reference to the drawings.

In the charging device 1, the plate-shaped members are a liquid crystal panel 2 and a protective panel 3 that protects the surface of the liquid crystal panel 2. An adhesive 7 is charged into a space between the liquid crystal panel 2 and the protective panel 3 to bond the two panels together.

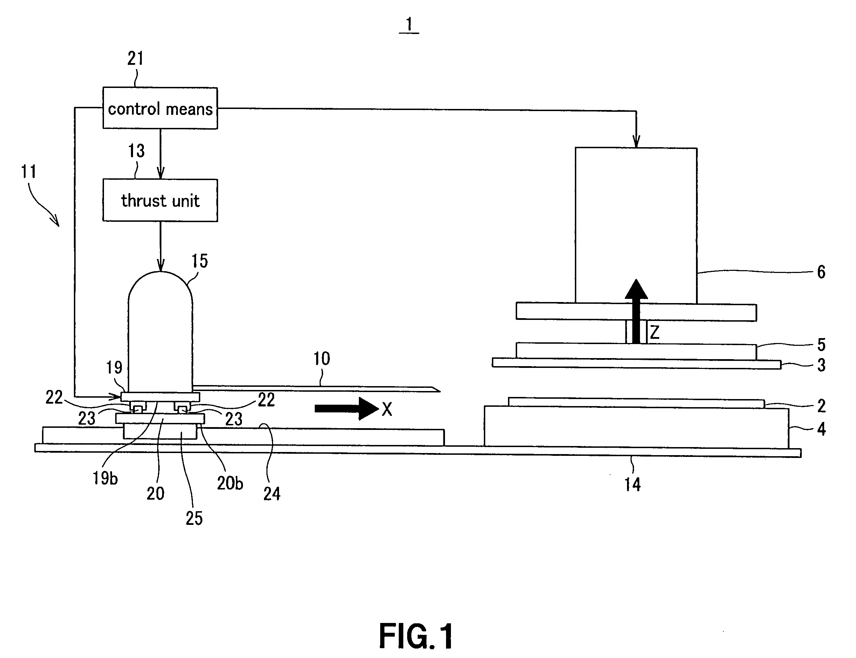

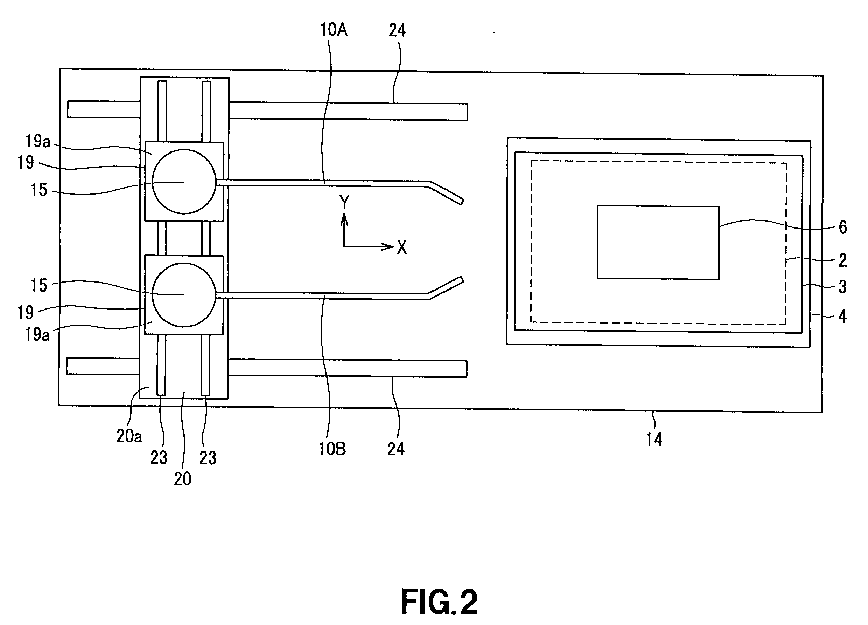

Referring to Figs.1 and 2, the charging device 1 includes a liquid crystal panel holding base member 4 that holds the liquid crystal panel 2, and a protective panel holding base member 5 that holds the protective panel 3. The charging device also includes an actuator 6 that, by lifting or lowering the protective panel holding base member 5, causes the liquid crystal panel 2 and the protective panel 3 to approach to or move away from each other. The charging device also includes an emission nozzle 10 introduced into a space between the liquid crystal panel 2 and the protective panel 3 to emit the adhesive 7, and a nozzle movement unit 11 to produce movement of the emission nozzle 10. The charging device further includes a syringe 15 which is connected to the emission nozzle 10 and in which the adhesive 7 is stored, and a thrust unit 13 that causes the adhesive 7 to be emitted via an emission opening 17 of the emission nozzle 10. These components of the charging device are arranged on a table 14.

The liquid crystal panel 2 is a liquid crystal cell in which liquid crystal is sealed in-between upper and lower approximately rectangular glass substrates. The protective panel 3 is bonded to one of the glass substrates which is directed to a viewer. The protective panel 3 performs the role of improving the viewing performance of the liquid crystal panel 2 and protecting the liquid crystal panel 2 against impacts or damages, and is formed of a transparent material, such as reinforced glass or a plate formed of an acrylic material.

The liquid crystal panel holding base member 4, holding the liquid crystal panel 2, is secured on the table 14, and holds the liquid crystal panel 2, by means such as vacuum suction, so that a bonding surface of the liquid crystal panel 2 to the protective panel 3 will face a front side. The protective panel holding base member 5, holding the protective panel 3, is carried by the actuator 6 on the liquid crystal panel holding base member 4, and holds the protective panel 3, by means such as vacuum suction, so that a bonding surface of the protective panel to the liquid crystal panel 2 will face a front side. The liquid crystal panel holding base member 4 and the protective panel holding base member 5 have the bonding sides thereof to the liquid crystal panel 2 and the protective panel 3 set substantially in a plumb line direction to hold the major surfaces of the liquid crystal panel 2 and the protective panel 3 substantially in a plumb line direction.

At least one out of the liquid crystal panel holding base member 4 and the protective panel holding base member 5 is desirably transparent for effecting position matching between the liquid crystal panel 2 and the protective panel 3. The charging device 1 effects position matching between the liquid crystal panel 2 and the protective panel 3 as the charging device holds the liquid crystal panel 2 and the protective panel 3 at a preset location of the liquid crystal panel holding base member 4 and at a preset location of the protective panel holding base member 5, respectively. Thus, it becomes necessary for the charging device 1 to effect position matching of the liquid crystal panel 2 with respect to the liquid crystal panel holding base member 4 as well as to effect position matching of the protective panel 3 with respect to the protective panel holding base member 5.

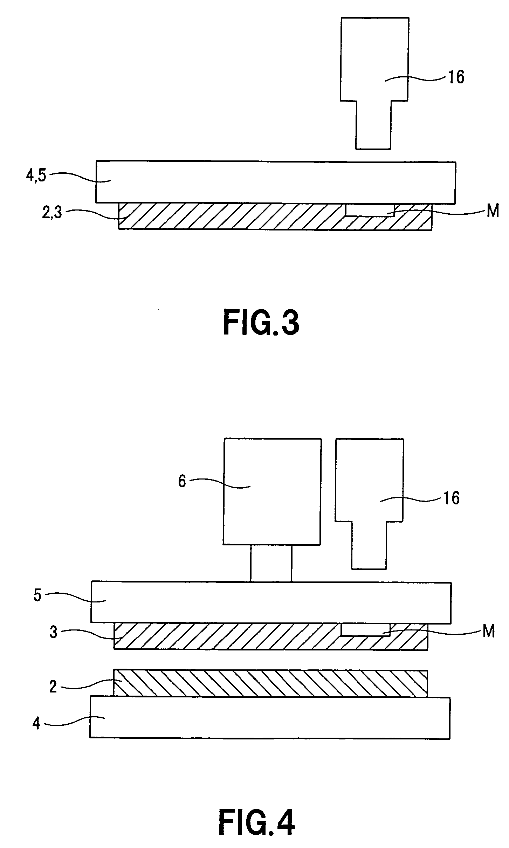

Referring to Fig.3, if, in the charging device 1, the liquid crystal panel holding base member 4 is formed of a transparent material, a reference mark for position matching M, provided on the liquid crystal panel 2, may be read out by a camera 16 from a side of the liquid crystal panel holding base member 4 opposite to its suction surface for the liquid crystal panel 2. In similar manner, if the protective panel holding base member 5 is formed of a transparent material, a reference mark for position matching M, provided on the protective panel 3, may be read out by a camera 16 from a side of the protective panel holding base member 5 opposite to its suction surface for the protective panel 3.

In the charging device 1 of the present Example, the liquid crystal panel 2 is sucked to a preset position on the liquid crystal panel holding base member 4, and position matching is effected between the protective panel holding base member 5 and the protective panel 3. In doing so, the protective panel 3 is position-matched with respect to the liquid crystal panel 2. Thus, in the charging device 1, the protective panel holding base member 5 is formed to be transparent and the camera 16 is fixed above a side of the protective panel holding base member opposite to its suction surface for the protective panel 3, as shown in Fig.4. The reference mark M, printed on a surface of the protective panel 3 opposite to its bonding surface, is read out.

In more concrete terms, the charging device 1 sets the position of the protective panel 3 so that the reference mark M is at the center of a frame of the camera 16. It is possible for the charging device 1 to use the outer shape of the protective panel 3, as reference, such as by setting the position of the protective panel 3 so that a corner part of the protective panel 3 will be aligned with the camera frame line.

The actuator 6, supporting the protective panel holding base member 5, causes movement of the protective panel holding base member 5 in an up-and-down direction corresponding to an arrow-z direction and an anti-arrow-z direction in Fig.1. When the liquid crystal panel 2 is to be held by the stage 4 or the protective panel 3 is to be held by the stage 5, the actuator 6 causes upward movement of the protective panel holding base member 5. When the adhesive 7 is to be charged into the space between the liquid crystal panel 2 and the protective panel 3, the actuator causes downward movement of the protective panel holding base member 5.

During charging the adhesive 7, the actuator 6 causes the protective panel holding base member 5 to descend to maintain the liquid crystal panel 2 and the protective panel 3 at a preset spacing from each other. This spacing is such a distance that the emission nozzle 10, explained later on, may be introduced into the spacing and the adhesive 7 may be coated as it is contacted with the liquid crystal panel 2 and the protective panel 3. After charging the adhesive 7, the actuator 6 causes further downward movement of the protective panel holding base member 5 to thrust the protective panel 3 towards the liquid crystal panel 2 under a preset pressure for a preset time period. This spreads the adhesive 7 over the entire surfaces of the liquid crystal panel 2 and the protective panel 3.

The emission nozzle 10, emitting the adhesive 7 into the space between the liquid crystal panel 2 and the protective panel 3, has a tubular portion extending parallel to the major surfaces of the liquid crystal panel 2 and the protective panel 3. The liquid crystal panel 2 is held by the liquid crystal panel holding base member 4 and the protective panel 3 is held by protective panel holding base member 5, as described above. The emission nozzle 10 is connected to the syringe 15 that is a source of supply of the adhesive 7 so that the emission nozzle is maintained at a height such that it may be reciprocated within the spacing between the liquid crystal panel 2 and the protective panel 3 without contacting with the two panels which are at positions extremely close to each other. The emission nozzle 10 is moved by the nozzle movement unit 11 in the anti-arrow-X direction in Fig.1 and in an arrow-Y direction as well as in an anti-arrow-Y direction in Fig.2. This plots a preset emission pattern, as later explained, in the gap between the liquid crystal panel 2 and the protective panel 3.

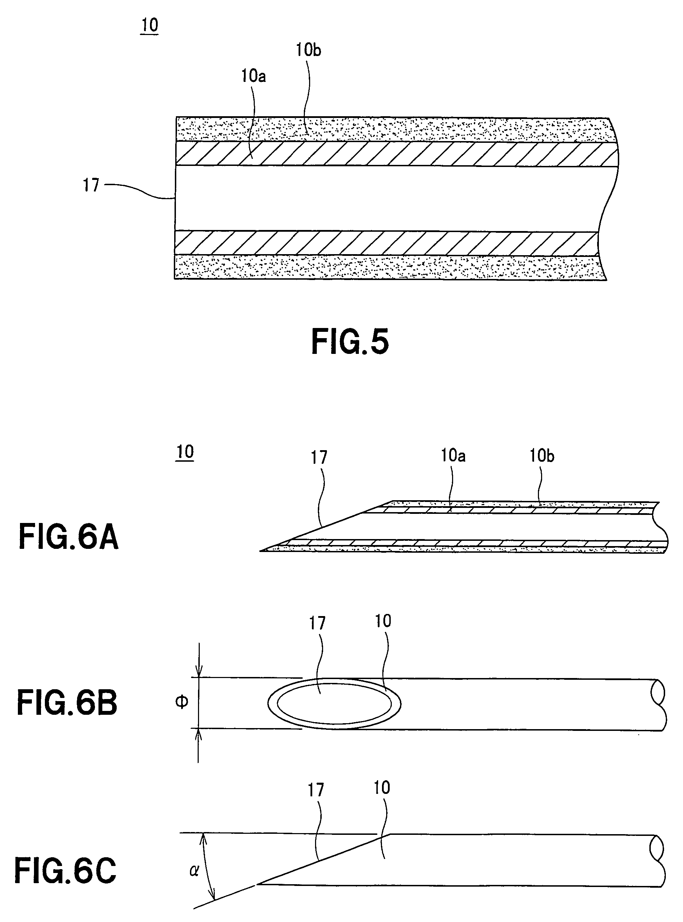

Referring to Fig.5, the emission nozzle 10 is formed by a main nozzle member 10a, formed of metal or industrial plastics, and a pliant resin layer 10b that coats the main nozzle member 10a and that is not apt to damage the liquid crystal panel 2 or the protective panel 3. The resin layer 10b is formed of a resin low in friction performance and high in abrasion resistance and corrosion resistance, while being non-wettable, e.g., a fluorine-based resin, and is provided on the surface of the main nozzle member 10a by printing or coating.

Since the emission nozzle 10 includes the resin layer 10b, it is not liable to damage the liquid crystal panel 2 or the protective panel 3 even when the emission nozzle, moving in the gap therebetween to emit the adhesive 7, comes into sliding contact with the two panels 2, 3. That is, the emission nozzle is formed of metals or industrial plastics, and travels through the gap between the liquid crystal panel 2 and the protective panel 3 by nozzle movement unit 11 to coat the adhesive 7 thereon. Although the emission nozzle 10 is moved so as not to be abutted against the liquid crystal panel 2 or the protective panel 3, it may be so abutted due to oscillations or flexures. Even in these cases, the liquid crystal panel 2 or the protective panel 3 is not damaged owing to the coating by the resin layer 10b.

Moreover, since the emission nozzle 10 is provided with the resin layer 10b high in non-wettability and corrosion resistance, it is possible to prevent the adhesive 7 from drooping from the emission opening 17 even after emission ceases. It is thus possible for the emission nozzle 10 to apply and coat the adhesive 7 only at preset sites to avoid a situation in which the adhesive 7 is deposited at unanticipated sites.

Since the emission nozzle 10 is not liable to be damaged by contact with the liquid crystal panel 2 or the protective panel 3, the adhesive 7 may be coated without lowering the speed of movement by the nozzle movement unit 11. Hence, there is no marked difference between the air exposure time of the adhesive material previously emitted and that of the adhesive material emitted later, such that there is no difference in charging or curing performance. This is beneficial because it is then possible for the charging device 1 to coat the adhesive 7 without lowering the speed of movement by the nozzle movement unit 11. Note that coating of the adhesive 7 is desirably finished promptly without decreasing the nozzle movement speed in consideration that the adhesive coating process becomes more time-consuming the larger the substrate size.

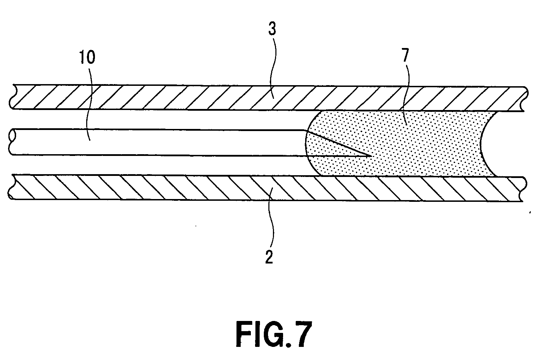

Referring to Fig.6A, the emission nozzle 10 may have an upper portion of its foremost part cut obliquely so that the emission opening 17 will be directed upwards in a plumb-line direction. In such case, when the emission nozzle 10 has started emitting the adhesive 7, the adhesive is initially deposited on the protective panel 3 disposed upwards and subsequently deposited by gravity on the liquid crystal panel 2 disposed downwards. The emission nozzle 10 is moved in the gap between the liquid crystal panel 2 and the protective panel 3, as it emits the adhesive 7. Thus, as shown in Fig.7, the emission nozzle 10 applies the adhesive 7 in a state in which the adhesive becomes deposited at all times on the surfaces of the two panels 2, 3.

In the charging device 1, the emission opening 17 of the emission nozzle 10 is directed upwards in this manner and the adhesive 7 is applied so as to be deposited at all times on the surfaces of the two panels 2, 3. It is thus possible to prevent air bubbles from being left in the adhesive 7.

The emission nozzle 10 has a diameter φ such that, for example, 6 mm ≥φ≥ 2 mm, as shown in Fig.6B. This diameter φ is determined depending on the gap between the liquid crystal panel 2 and the protective panel 3, and is selected at a value for which the emission nozzle will contact with none of the two panels.

The emission opening 17 of the emission nozzle 10 has an angle α such that 90° >α≥ 30°, as shown in Fig.6C. If the angle α is greater than 90°, it is not possible for the emission nozzle 10 to deposit the adhesive 7 on the protective panel 3 at the emission beginning time. In such case, the adhesive may undesirably become deposited at unanticipated sites. On the other hand, if the angle α is less than 30°, the adhesive 7 is not liable to descend onto the liquid crystal panel 2, disposed on the lower side, resulting in the risk of entraining air bubbles. Specifically, the angle α is determined within the range of 90° >α≥ 30°, depending on the viscosity of the adhesive 7. Such angle α is selected that, for the selected angle α, the adhesive 7 is initially deposited on the protective panel 3 on the upper side and then deposited on the liquid crystal panel 2 without entraining air bubbles, with the adhesive coming into contact with the two panels as it is being emitted via the emission opening.

The nozzle movement unit 11 that causes the movement of the emission nozzle 10 includes a first nozzle stage 19 on which to load the syringe 15 and a second nozzle stage 20 on which to load the first nozzle stage 19. The syringe 15 is loaded on an upper side 19a of the first nozzle stage 19, on a lower side 19b of which a slider 22 is mounted. The first nozzle stage 19 is movable in the arrow-Y direction and in the anti-arrow-Y direction in Fig.2 by the slider 22 sliding on a first guide rail 23 provided on the second nozzle stage 20.

The first guide rail 23 that guides the first nozzle stage 19 is provided on an upper surface 20a of the second nozzle stage 20. A slider 25 engaged with a second guide rail 24 of the table 14 is provided on a lower surface 20b of the second nozzle stage 20. The second nozzle stage is movable in the arrow-X direction and in the anti-arrow-X direction in Fig.1 by the slider 25 sliding on a second guide rail 24 provided on the table 14.

The charging device 1 includes two first nozzle stages 19 to coat the adhesive 7 using two emission nozzles 10A, 10B. The nozzle movement unit 11 includes a control means 21 for controlling the movement of the first and second nozzle stages 19, 20. The control means 21 is operatively linked to the lifting/ lowering movement of the liquid crystal panel holding base member 4 and the protective panel holding base member 5 to cause movement of the emission nozzles 10 in substantially the horizontal direction. In this manner, the emission nozzle may be introduced into and receded away from the gap between the liquid crystal panel 2 and the protective panel 3 without contacting with the two panels 2, 3.

In the charging device 1, the number of the emission nozzles 10 is not limited to two such that only one emission nozzle or not less than three emission nozzles may be loaded. In any of these cases, the emission nozzles 10 are connected to syringes 15 loaded on the first nozzle stages 19. These first nozzle stages 19 are slidably mounted on respective second nozzle stages 20.

In the syringe 15, loaded on the first nozzle stage 19, there is stored the adhesive 7 to be emitted via the emission nozzles 10. Each syringe 15 is connected to the thrust unit 13 designed to emit the adhesive 7 stored via the emission nozzle 10 so that the emission as well as emission stop of the adhesive and the emission pressure are controlled. The thrust unit 13 is a cylinder of compressed air and the control means 21 controls the supply of the gas into the syringe 15 as well as supply stop thereof and the gas supply pressure. The adhesive 7 is emitted from the emission nozzles 10 by supplying the gas under a preset pressure into the syringe 15.

The adhesive 7 emitted via the emission nozzles 10 may be a transparent elastic UV curable resin. The refractive index of the resin is to be controlled to suppress light scattering to prevent the viewing performance of the liquid crystal panel 2 from being lowered even in case the adhesive is charged into the space between the liquid crystal panel 2 and the protective panel 3.

The adhesive 7 is to be of a viscosity such that it may be charged as it is bonded simultaneously to the liquid crystal panel 2 and the protective panel 3 and that the adhesive is not allowed to flow out at outer edges of the two panels 2, 3 but may remain bonded to the two panels 2, 3. For example, the viscosity may range between 1000 mPa and 4000 mPa. Depending on such viscosity of the adhesive 7, the gap between the liquid crystal panel 2 and the protective panel 3 is set in a range between 3.5 mm to 10 mm.

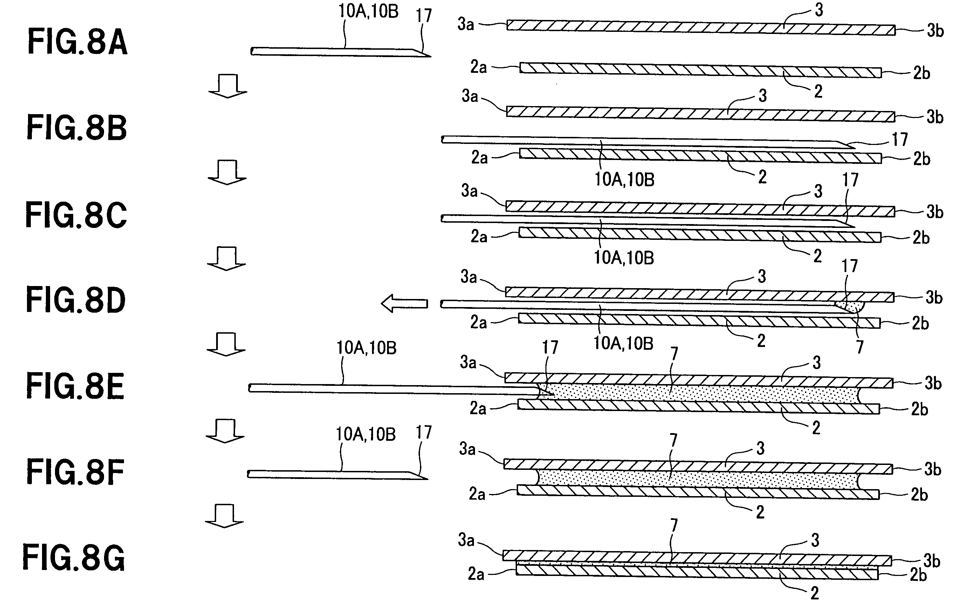

The operation of the charging device 1 will now be explained with reference to Figs.8A to 8G and 9A to 9F. Although the case of charging the adhesive 7 into the gap between the liquid crystal panel 2 and the protective panel 3, which are rectangular-shaped, is now explained, the liquid crystal panel 2 and the protective panel 3 are not limited to rectangular-shaped panels.

In the charging device 1, the liquid crystal panel holding base member 4 and the protective panel holding base member 5 are initially spaced apart from each other by the actuator 6. The liquid crystal panel 2 is sucked to the liquid crystal panel holding base member 4, whilst the protective panel 3 is sucked to the protective panel holding base member 5 (Figs.8A, 9A).

The liquid crystal panel 2 is loaded at a preset position on the liquid crystal panel holding base member 4, as described above. The protective panel holding base member 5 is transparent. To hold the protective panel 3 at a preset position matched to the liquid crystal panel 2, loaded at the preset position, a reference mark M, formed on the suction surface of the protective panel 3, may be imaged by a camera 16 secured above a side of the protective panel holding base member 5 opposite to its suction surface. The charging device 1 has to adjust the position of the protective panel 3 so that the reference mark M will be at the center of a frame of the camera 16 to hold the protective panel 3 at a preset position directly facing the liquid crystal panel 2.

At this time, each of the first nozzle stage 19 has been moved by the control means in the anti-arrow-X direction in Fig.1, so that each of the emission nozzles 10 has been receded in the anti-arrow-X direction out of the gap between the liquid crystal panel 2 and the protective panel 3.

After the end of position matching between the liquid crystal panel 2 and the protective panel 3, the control means in the charging device 1 causes sliding of the two first nozzle stages 19 in the arrow-X direction. By so doing, the emission nozzles 10A, 10B are introduced into a gap between the liquid crystal panel 2 and the protective panel 3 via longitudinal end lateral sides 2a, 3a of the two panels 2, 3 (Figs.8B, 9B). Note that the emission nozzles 10A, 10B are introduced at such preset height positions that the two nozzles are not abutted against the liquid crystal panel 2 or the protective panel 3 when these two panels are drawn close to each other (Fig.8B). Also note that the emission nozzles 10A, 10B are positioned so that their emission openings 17 are located in the vicinity of lateral sides 2b, 3b on the opposite ends along the longitudinal direction of the liquid crystal panel 2 or the protective panel 3 (Fig.9B).

Then, in the charging device 1, the actuator 6 is acted upon to cause the liquid crystal panel holding base member 4 and the protective panel holding base member 5 to approach to each other. By so doing, the liquid crystal panel 2 and the protective panel 3 are maintained at a preset interval from each other (Fig.8C).

Then, in the charging device 1, the adhesive 7 is emitted via the emission nozzles 10A, 10B, as the first and second nozzle stages 19, 20 are moved by the control means. In this manner, a preset charging pattern is plotted within the gap defined between the liquid crystal panel 2 and the protective panel 3 (Figs.8D, 9(C)). At this time, the adhesive 7 is emitted as the emission nozzles 10A, 10B are moved in the anti-arrow-X direction, arrow-Y direction and in the anti-arrow-Y direction. Hence, the emission openings 17 of the emission nozzles 10A, 10B are not intruded into the bulk of the adhesive, charged into the gap between the liquid crystal panel 2 and the protective panel 3, so that the adhesive may be prevented from becoming affixed to the main nozzle member. Thus, in the charging device 1, it becomes possible to avoid such a situation in which the adhesive 7 becomes affixed to unforeseen sites by the adhesive 7 becoming affixed to the emission nozzles 10A, 10B.

In addition, the main nozzle member of each of the emission nozzles 10A, 10B is coated with the resin 10b low in friction performance and high in abrasion resistance, corrosion resistance and in non-wettability, as described above. Thus, if the emission nozzles 10A, 10B are abutted against the liquid crystal panel 2 or the protective panel 3 due to, for example, vibrations or flexures, there is no fear that the liquid crystal panel 2 or the protective panel 3 should become damaged. Since each of the emission nozzles 10A, 10B is provided with the resin layer10b, the adhesive 7 may be prevented from drooping from the emission opening 17 even after the emission ceases. Moreover, the adhesive 7 may be applied by the emission nozzles 10A, 10B without decreasing the movement speed managed by the nozzle movement unit 11. In addition, there is no risk that the difference in product quality is produced by the difference in the air exposure time of the adhesive 7 emitted previously and that of the adhesive emitter later on.

Note that, if the emission openings 17 of the emission nozzles 10A, 10B are directed upwards, the adhesive 7 is affixed to the protective panel 3 disposed above. The adhesive 7 is then lowered and becomes affixed to the liquid crystal panel 2 disposed below. The adhesive 7 is then emitted, as each of the emission nozzles 10A, 10B continues to be moved in the anti-arrow-X direction, in the arrow-Y direction and in the anti-arrow-Y direction, as it emits the adhesive 7, such as to plot a predetermined plot pattern P1 (Fig.8E and 9D). Each of the emission nozzles 10A, 10B coats the adhesive 7 as the adhesive becomes affixed to both the liquid crystal panel 2 and the protective panel 3 simultaneously, so that it becomes possible to prevent air bubbles from becoming left in the adhesive 7.

Referring to Fig.9D, the plot pattern P1 of the adhesive 7, charged into the gap between the liquid crystal panel 2 and the protective panel 3, is made up of a thick line part 30 and two thin line parts 31. The thick line part is plotted for extending along the longitudinal direction at the center of each of the liquid crystal panel 2 and the protective panel 3, whilst the thin line parts 31 are extended from both ends of the thick line part 30 towards four corners of the liquid crystal panel 2 and the protective panel 3. The thick line part 30 is formed at about the center along the longitudinal direction of each of the liquid crystal panel 2 and the protective panel 3, whilst the thin line parts 31 are continuously extended from both longitudinal ends of the thick line part 30 towards the four corners of the liquid crystal panel 2 and the protective panel 3.

The plot pattern P1 is formed by the emission nozzle 10A and the other emission nozzle 10B of the charging device 1 plotting symmetrical pattern portions in the transverse direction with respect to the thick line part 30. The emission nozzle 10A and the other emission nozzle 10B are provided on the charging device 1. That is, the emission nozzle 10A plots a thick line part portion 30a and two thin line part portions 31a on one side of the plot pattern P1. The other emission nozzle 10B plots a thick line part portion 30b and two thin line part portions 31b on the other side of the plot pattern P1. The two emission nozzles 10A, 10B are moved by the nozzle movement unit 11 in synchronization with each other. More precisely, the two emission nozzles are receded in the anti-arrow-X direction and moved towards each other in the arrow-Y direction and in the anti-arrow-Y direction in order to plot the thin line parts 31 b (one of the thin line parts 31). The two emission nozzles are then receded in the anti-arrow-X direction to plot the thick line part 30. The two emission nozzles are still receded in the anti-arrow X direction and simultaneously moved away from each other in the arrow-Y direction and in the anti-arrow Y direction in order to plot the opposite side thin line part 31b (the other of the thin line parts 31).

The thick line part 30 and the thin line part 31 may be drawn in a different way if, as the amount of emission of the adhesive 7 via the emission nozzle 10A, 10B per unit time is kept constant, the speed of movement of each of the first and second nozzle stages 19, 20 is controlled.

When the preset plot pattern has been formed in the gap between the liquid crystal panel 2 and the protective panel 3, the charging device 1 actuates the first and second nozzle stages 19, 20 by the control means 21 to cause the emission nozzles 10A, 10B to be receded from the gap between the liquid crystal panel 2 and the protective panel 3 (Fig.8F).

The charging device 1 then causes the liquid crystal panel holding stage 4 to descend by the actuator 6 to thrust the liquid crystal panel 2 and the protective panel 3 to each other to spread out the adhesive 7 (Figs.8G and 9E). In the charging device 1, the plot pattern P1 is formed symmetrically at the center of the panels 2, 3, and hence is spread out evenly over the two panels 2, 3 in their entirety. Moreover, in the charging device 1, since the thin line parts 31 are provided for extending towards the four corners of the panels 2, 3, the adhesive 7 is spread out positively to the four corners of the panels 2, 3. Note that the thrust force or the time duration of the thrust by the actuator 6 is determined depending on the size of the gap between the liquid crystal panel 2 and the protective panel 3, viscosity of the adhesive 7 or its coating volume. For example, the thrust force and the time duration of the thrust are set at 2.5 kPa and at 0.3 sec, respectively.

Thereafter, the thrusting by the actuator 6 in the charging device 1 is released. The suction of the liquid crystal panel 2 by the liquid crystal panel holding stage 4 as well as that of the protective panel 3 by the protective panel holding stage 5 is released. The resulting product is then allowed to stand at an ambient pressure for a preset time interval, such as for five minutes. This evenly charges the adhesive over the entire extent of the gap between the liquid crystal panel 2 and the protective panel 3, including its niches and four corners (Fig.9F). After the adhesive 7 has been charged over the entire extent of the gap in this manner, the adhesive 7 is cured by ultraviolet radiation by an ultraviolet illumination device, not shown.

Since the charging device draws the plot pattern P1, as a symmetrical pattern, by as it were a "single-stroke" drawing, the plot pattern P1, spread out evenly, may be drawn in the shortest possible time.

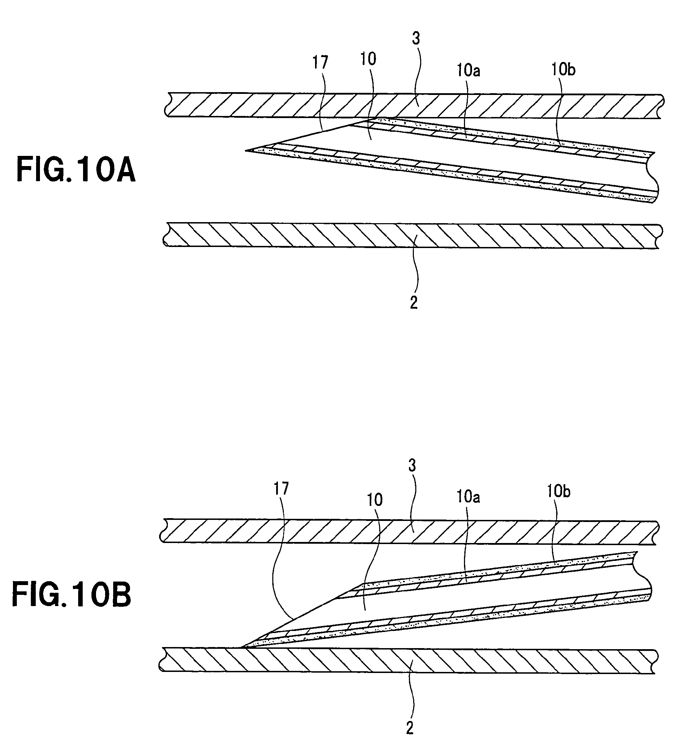

In the charging device 1, the adhesive 7 may be coated as the emission nozzle 10 is in sliding contact with the liquid crystal panel 2 or the protective panel 3, whichever is more rigid. In the charging device 1, the emission nozzle 10 may be moved in the gap between the liquid crystal panel 2 or the protective panel 3 as the emission opening 17 of the emission nozzle 10 is abutted against the protective panel 3 formed by reinforced glass or a plate formed of an acrylic material, as shown in Fig.10A.

The emission nozzle 10 of the charging device 1 is moved as the emission opening 17 is abutted against the protective panel 3, and hence the emission nozzle 10 is moved as it is guided by the protective panel 3. Consequently, the charging device 1 may be prevented from wobbling, thus enabling the volume of emission of the adhesive 7 and the movement speed of the emission nozzle 10 to be maintained constant. Note that the emission nozzle 10 of the charging device 1 includes the resin layer 10b low in friction performance and high in abrasion resistance. Thus, even when the emission opening 17 is in sliding contact with the protective panel 3, there is no risk that the protective panel 3 is damaged or the resin layer 10b is worn out or destroyed.

In such charging device 1, the emission nozzle 10 is inclined upwards at the outset, before it is attached to the syringe 15. Moreover, the actuator 6 is controlled by the control means 21 so that the emission opening 17 is in sliding contact with the protective panel 3, such as to set the height position of the protective panel 3. Again at this time, the gap between the liquid crystal panel 2 and the protective panel 3 in the charging device 1 is set to a value (height) that allows the adhesive 7 emitted via the emission opening 17 to be deposited and coated on the facing sides of the liquid crystal panel 2 and the protective panel 3.

Note that, if, in the charging device 1, the liquid crystal panel 2 is more rigid than the protective panel 3, the emission opening 17 of the emission nozzle 10 is brought into sliding contact with the liquid crystal panel 2, as shown in Fig. 10B. If, in the charging device 1, a harder one of pair panels is brought into sliding contact with the emission nozzle 10, the emission nozzle 10 may be guided positively in a manner free from wobbling to deposit and coat the adhesive 7 on the facing sides of the liquid crystal panel 2 and the protective panel 3. Moreover, in the charging device 1, since the emission nozzle 10 may be guided positively, the volume of emission of the adhesive 7 may be maintained constant and the high operating speed may be maintained without compromising the movement speed of the emission nozzle 10.

Note that, depending on the panel shape, the charging device 1 may not necessarily plot the plot pattern P to a symmetrical shape. On the other hand, the charging device 1 may draw the plot pattern P to a symmetrical shape by causing movement only of a single emission nozzle 10. Moreover, the charging device 1 may draw the symmetrical shape of the plot pattern P so that there is at least one contact point as a point of symmetry. In addition, in coating the adhesive 7 on circular-shaped panels 2, 3, it is only necessary that the charging device 1 forms a circular-shaped plot pattern P at the center of each of the panels 2, 3.

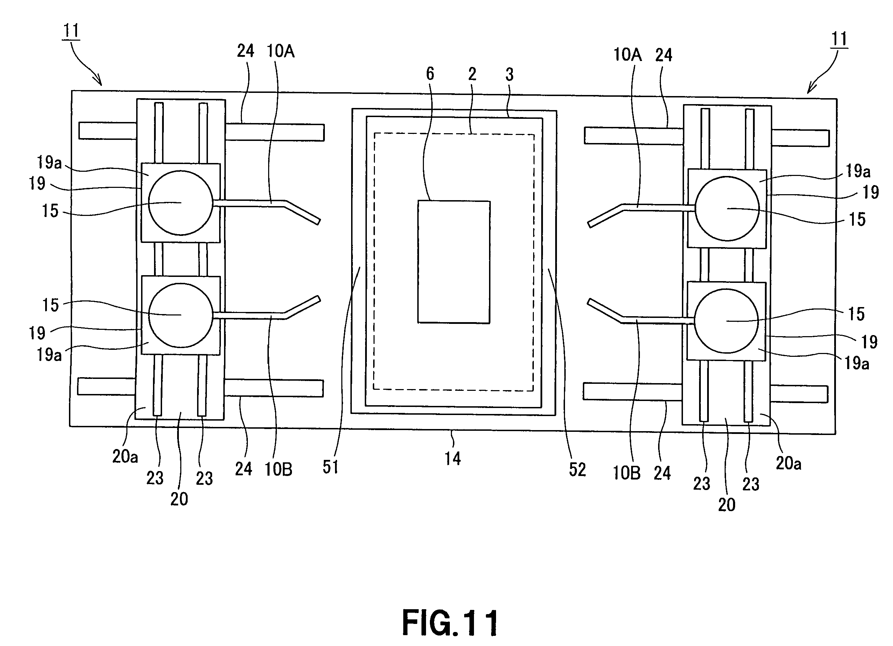

The nozzle movement unit 11 may be provided with a plurality of emission nozzles 10 so that these nozzles will be introduced into the gap from opposite sides of the liquid crystal panel 2 and the protective panel 3. There may be cases where the liquid crystal panel 2 and the protective panel 3 become larger in format and equivalent to the liquid crystal television with a size not less than 12 inches. In such case, the emission nozzle 10 and the nozzle movement unit 11 may be provided on each lateral side of the panels 2, 3, as shown in Fig.11, and the adhesive 7 may be applied from both lateral sides simultaneously to reduce the time of coating the adhesive 7.

That is, in a charging device 50, shown in Fig.11, two emission nozzles 10A, 10B and two nozzle movement units 11 that cause movement of these emission nozzles 10A, 10B are provided on each of the transverse sides of the liquid crystal panel 2 and the protective panel 3. In coating the adhesive in the charging device 50, the two emission nozzles 10 are introduced from a side 51 and an opposite side 52 in the transverse direction to draw a preset plot pattern P.

At this time, the emission nozzles 10A, 10B are moved from a mid part of each of the panels 2, 3 towards the sides of entrance 51, 52 and along the longitudinal direction of the panels 2, 3 in synchronization with each other. When the plotting has come to a close, the emission nozzles 10A, 10B are receded from the sides of entrance 51, 52. It is thus possible for the nozzle movement unit 11 to cause movement of the emission nozzles 10A, 10B over the shortest routes to draw the preset plot pattern P in a short time even on large-sized panels.

In charging the adhesive 7 into the gap of the small to medium sized panels 2 and 3, it is sufficient that one or a plurality of emission nozzles 10 are provided on one longitudinal sides of the rectangular-shaped panels 2, 3. In charging the adhesive 7 into the gaps of the small to medium sized panels 2 and 3, it is of course possible that one or a plurality of emission nozzles 10 are provided on both longitudinal sides of the rectangular-shaped panels 2, 3.

The charging device in which the adhesive 7 for bonding two plate-shaped members to each other is charged into a gap between the plate-shaped members has been described above. However, in the charging device of the present invention, three or more plate-shaped members may be retained with the respective major surfaces facing each other, and a charging liquid material, such as the adhesive 7, may be charged into each gap of the plate-shaped members.

In this case, means for holding plate-shaped members, constituting intermediate layers, other than the plate-shape members of the uppermost and lowermost layers, grip lateral side edges of the plate-shaped members to expose the major surfaces of the plate-shaped members. In the present charging device, emission nozzles for charging the liquid material into the gaps between the plate-shaped members, and movement units for the emission nozzles, may be provided for each gap between the plate-shaped members. In this case, a plurality of emission nozzles for emitting the charging liquid material into different gaps may be arranged for each side of the rectangular-shaped plate-shape members. On the other hand, in the present charging device, a single emission nozzle may be moved so that the single emission nozzle will introduce the charging liquid material into a plurality of gaps.

### Industrial Utilizability

The present invention may be applied to bonding a plasma display to its protective panel, in addition to bonding the liquid crystal panel 2 and the protective panel 3. It may also be applied to bonding monitors for television, a mobile phone, PDA, a mobile gaming machine, a digital still camera, a video camera, a digital photo frame, organic EL or a touch panel to a protective panel.

## Claims

1. A charging device (1) comprising
a plurality of holding members (4, 5) for holding a plurality of plate-shaped members (2, 3) so that the major surfaces of the plate-shaped members (2, 3) will face each other;
a movement member (6) for causing movement of the holding members towards and away from each other;
an emission nozzle (10) introduced into a gap defined between the plate-shaped members (2, 3) held by the holding members (4, 5) to emit a charging liquid material into the gap;
a nozzle movement unit (11) for causing movement of the emission nozzle (10) in an in-plane direction of the plate-shaped members (2, 3);
control means (21) for controlling the nozzle movement unit (11);
a reservoir in which the charging liquid material is stored; and
a thrust unit (13) for emitting the charging liquid material stored in the reservoir via the emission nozzle (10);
**characterised in that** the emission nozzle (10) is coated with resin.

2. The charging device (1) of claim 1, wherein
the control means (21) controls the nozzle movement unit (11) so that a foremost part of the emission nozzle (10) will be in sliding contact with a more rigid one of the pair plate-shaped members (2, 3).

3. The charging device (1) of claim 1 or 2, wherein
the emission nozzle (10) is in sliding contact with the plate-shaped member (3) disposed above.

4. The charging device of claim 1 or 2, wherein
the charging liquid material is an adhesive that bonds the pair plate-shaped members (2, 3) together;
the movement member (6) causing movement of the holding members (4, 5) towards each other after emission from the emission nozzle (10) to spread the charging liquid material in the gap defined between the pair plate-shaped members (2, 3).

5. The charging device (1) of claim 1 or 2, wherein
the resin is a fluorine-based resin.

6. The charging device (1) of claim 1 or 2, wherein
a plurality of the emission nozzles (10A, 10B) are provided, and wherein
the emission nozzles (10A, 10B) are introduced into the gap from one sides of the pair plate-shaped members (2, 3).

7. The charging device (1) of claim 1 or 2, wherein
the emission nozzle (10A, 10B) is provided on each of one and the other sides of the pair plate-shaped members (2, 3) and introduced into the gap from each of the one and the other sides of the plate-shaped members (2, 3).

8. The charging device (1) of claim 6, wherein
two of the emission nozzles (10A, 10B) are provided; and wherein
the emission nozzles (10A, 10B) draw a symmetrical shape with the charging liquid material; the symmetrical shape including a thick line part extending in the longitudinal direction of the plate-shaped members (2, 3) and a thin line part extending outwards from the thick line part in the transverse direction thereof.

9. The charging device (1) of claim 7, wherein
two of the emission nozzles (10A, 10B) are provided; and wherein
the emission nozzles (10A, 10B) draw a symmetrical shape with the charging liquid material; the symmetrical shape including a thick line part extending in the longitudinal direction of the plate-shaped members (2, 3) and a thin line part extending outwards from the thick line part in the transverse direction thereof.

10. The charging device (1) of claim 1 or 2, wherein
the pair plate-shaped members (2, 3), carried facing each other, are a picture display panel and a transparent protective panel bonded to the picture display panel;
the charging liquid material being a transparent resin.

11. The charging device (1) of claim 1 or 2, further comprising
curing means for curing the charging liquid material charged between the plate-shaped members (2, 3).

## Patentansprüche

1. Füllvorrichtung (1), umfassend
eine Vielzahl von Halteelementen (4, 5), um eine Vielzahl plattenförmiger Elemente (2, 3) zu halten, so dass die Hauptoberflächen der plattenförmigen Elemente (2, 3) einander gegenüberliegen werden:
ein Bewegungselement (6), um eine Bewegung der Halteelemente aufeinander zu und voneinander weg zu veranlassen;
eine Abgaberöhre (10), die in einen Spalt eingeführt wird, der zwischen den von den Halteelementen (4, 5) gehaltenen plattenförmigen Elementen (2, 3) definiert ist, um ein flüssiges Füllmaterial in den Spalt abzugeben;
eine Röhrenbewegungseinheit (11), um eine Bewegung der Abgaberöhre (10) in einer Ebenenrichtung der plattenförmigen Elemente (2, 3) zu veranlassen;
Steuerungsmittel (21), um die Röhrenbewegungseinheit (11) zu steuern;
ein Reservoir, in welchem das flüssige Füllmaterial gespeichert ist; und
eine Schubeinheit (13), um das im Reservoir gespeicherte flüssige Füllmaterial über die Abgaberöhre (10) abzugeben;
**dadurch gekennzeichnet, dass**
die Abgaberöhre (10) mit Harz beschichtet ist.

2. Füllvorrichtung (1) nach Anspruch 1, wobei
das Steuerungsmittel (21) die Röhrenbewegungseinheit (11) so steuert, dass ein vorderster Teil der Abgaberöhre (10) in Gleitkontakt mit einem steiferen des Paars plattenförmige Elemente (2, 3) steht.

3. Füllvorrichtung (1) nach Anspruch 1 oder 2, wobei
die Abgaberöhre (10) in Gleitkontakt mit dem oberhalb angeordneten plattenförmigen Element (3) steht.

4. Füllvorrichtung (1) nach Anspruch 1 oder 2, wobei
das flüssige Füllmaterial ein Klebstoff ist, der das Paar plattenförmige Elemente (2, 3) miteinander verbindet bzw. zusammenklebt;
das Bewegungselement (6) nach Abgabe aus der Abgaberöhre (10) eine Bewegung der Halteelemente (4, 5) aufeinander zu veranlasst, um das flüssige Füllmaterial in dem zwischen dem Paar plattenförmige Elemente (2, 3) definierten Spalt zu verteilen.

5. Füllvorrichtung (1) nach Anspruch 1 oder 2, wobei
das Harz ein Harz auf Fluorbasis ist.

6. Füllvorrichtung (1) nach Anspruch 1 oder 2, wobei
eine Vielzahl der Abgaberöhren (10A, 10B) vorgesehen ist, und wobei
die Abgaberöhren (10A, 10B) von einer Seite des Paars plattenförmige Elemente (2, 3) eingeführt werden.

7. Füllvorrichtung (1) nach Anspruch 1 oder 2, wobei
die Abgaberöhre (10A, 10B) auf je einer von einer und der anderen Seite des Paars plattenförmige Elemente (2, 3) vorgesehen ist und von je einer der einen und der anderen Seite der plattenförmigen Elemente (2, 3) in den Spalt eingeführt wird.

8. Füllvorrichtung (1) nach Anspruch 6, wobei
zwei der Abgaberöhren (10A, 10B) vorgesehen sind; und wobei
die Abgaberöhren (10A, 10B) mit dem flüssigen Füllmaterial eine symmetrische Form zeichnen; wobei die symmetrische Form einen dicken Linienteil, der in der Längsrichtung der plattenförmigen Elemente (2, 3) verläuft, und einen dünnen Linienteil umfasst, der von dem dicken Linienteil in dessen Querrichtung nach außen verläuft.

9. Füllvorrichtung (1) nach Anspruch 7, wobei
zwei der Abgaberöhren (10A, 10B) vorgesehen sind; und wobei
die Abgaberöhren (10A, 10B) mit dem flüssigen Füllmaterial eine symmetrische Form zeichnen; wobei die symmetrische Form einen dicken Linienteil, der in der Längsrichtung der plattenförmigen Elemente (2, 3) verläuft, und einen dünnen Linienteil umfasst, der von dem dicken Linienteil in dessen Querrichtung nach außen verläuft.

10. Füllvorrichtung (1) nach Anspruch 1 oder 2, wobei
das Paar plattenförmige Elemente (2, 3), die einander zugewandt getragen werden, ein Bildanzeigepanel und ein an das Bildanzeigepanel geklebtes transparentes Schutzpanel sind;
wobei das flüssige Füllmaterial ein transparentes Harz ist.

11. Füllvorrichtung (1) nach Anspruch 1 oder 2, ferner umfassend
Härtemittel, um das zwischen die plattenförmigen Elemente (2, 3) gefüllte flüssige Füllmaterial auszuhärten.

## Revendications

1. Dispositif de chargement (1) comprenant
plusieurs éléments de retenue (4, 5) pour retenir plusieurs éléments en forme de plaques (2, 3) de telle sorte que les surfaces principales des éléments en forme de plaques (2, 3) soient face à face ;
un élément de déplacement (6) pour provoquer le déplacement des éléments de retenue en vue de les rapprocher et de les éloigner l'un de l'autre ;
un éjecteur d'émission (10) qui est introduit dans un espace défini entre les éléments en forme de plaques (2, 3) retenus par les éléments de retenue (4, 5), pour émettre dans ledit espace une matière liquide de chargement ;
une unité de déplacement d'éjecteur (11) pour provoquer le déplacement de l'éjecteur d'émission (10) dans le même plan que les éléments en forme de plaques (2, 3) ;
des moyens de commande (21) pour commander l'unité de déplacement d'éjecteur (11) ;
un réservoir dans lequel est stockée la matière liquide de chargement ; et
une unité de jet (13) pour émettre la matière liquide de chargement stockée dans le réservoir, par l'intermédiaire de l'éjecteur d'émission (10) ;
**caractérisé en ce que** l'éjecteur d'émission (10) est revêtu de résine.

2. Dispositif de chargement (1) de la revendication 1, dans lequel
les moyens de commande (21) commandent l'unité de déplacement d'éjecteur (11) de telle sorte qu'une partie extrême avant de l'éjecteur d'émission (10) sera en contact de glissement avec un élément en forme de plaque (2, 3) plus rigide, parmi les deux éléments en forme de plaques (2, 3).

3. Dispositif de chargement (1) de la revendication 1 ou 2, dans lequel
l'éjecteur d'émission (10) est en contact de glissement avec l'élément en forme de plaque (3) disposé au-dessus.

4. Dispositif de chargement (1) de la revendication 1 ou 2, dans lequel
la matière liquide de chargement est un adhésif qui colle l'un à l'autre les deux éléments en forme de plaques (2, 3) ;
l'élément de déplacement (6) provoquant le rapprochement des éléments de retenue (4, 5) après émission à partir de l'éjecteur d'émission (10), pour répandre la matière liquide de chargement dans l'espace défini entre les deux éléments en forme de plaques (2, 3) ;

5. Dispositif de chargement (1) de la revendication 1 ou 2, dans lequel
la résine est une résine à base de fluor.

6. Dispositif de chargement (1) de la revendication 1 ou 2, dans lequel
plusieurs éjecteurs d'émission (10A, 10B) sont prévus, et
les éjecteurs d'émission (10A, 10B) sont introduits dans l'espace à partir d'un côté des deux éléments en forme de plaques (2, 3).

7. Dispositif de chargement (1) de la revendication 1 ou 2, dans lequel
l'éjecteur d'émission (10A, 10B) est prévu sur l'un des deux côtés de la paire d'éléments en forme de plaques (2, 3) et est introduit dans ledit espace à partir de chacun des deux côtés des éléments en forme de plaques (2, 3).

8. Dispositif de chargement (1) de la revendication 6, dans lequel
deux des éjecteurs d'émission (10A, 10B) sont prévus ; et
les éjecteurs d'émission (10A, 10B) tracent une forme symétrique avec la matière liquide de chargement ; la forme symétrique comprenant une partie de ligne épaisse qui s'étend dans le sens longitudinal des éléments en forme de plaques (2, 3), et une partie de ligne fine qui s'étend vers l'extérieur à partir de la partie de ligne épaisse, dans le sens transversal.

9. Dispositif de chargement (1) de la revendication 7, dans lequel
deux des éjecteurs d'émission (10A, 10B) sont prévus ; et
les éjecteurs d'émission (10A, 10B) tracent une forme symétrique avec la matière liquide de chargement ; la forme symétrique comprenant une partie de ligne épaisse qui s'étend dans le sens longitudinal des éléments en forme de plaques (2, 3), et une partie de ligne fine qui s'étend vers l'extérieur à partir de la partie de ligne épaisse, dans le sens transversal.

10. Dispositif de chargement (1) de la revendication 1 ou 2, dans lequel
les deux éléments en forme de plaques (2, 3), portés face à face, sont un panneau d'affichage d'image et un panneau de protection transparent collé au panneau d'affichage d'image ;
la matière liquide de chargement étant une résine transparente.

11. Dispositif de chargement (1) de la revendication 1 ou 2, comprenant également
des moyens de durcissement pour durcir la matière liquide de chargement chargée entre les éléments en forme de plaques (2, 3).
